# EUROPEAN PATENT SPECIFICATION

(11) **EP 2 134 587 B1**
(45) Date of publication and mention of the grant of the patent: **30.07.2014**
(21) Application number: 08724192.3
(22) Date of filing: 05.03.2008
(51) Int. Cl.: B62D 7/20, B62D 7/16, B62D 7/22, B62D 7/14

(54) **DRAGLINK ARRANGEMENT**
SPURSTANGENANORDNUNG
AGENCEMENT DE BARRE INTERMÉDIAIRE DE TRACTION

(30) Priority: 13.03.2007 SE 0700636
(43) Date of publication of application: 23.12.2009
(73) Proprietor: Scania CV AB (publ), 151 87 Södertälje (SE)
(72) Inventor: OREMUS, Sebastiaan, S-151 44 Södertälje (SE)
(86) International application number: PCT/SE2008/050245
(87) International publication number: WO 2008/111901

(56) References cited:
- DE-A1- 3 707 700
- DE-A1-102006 023 784
- US-A1- 2002 153 687

## Description

### Technical field

The invention relates to a draglink device for a vehicle.

### Background

A number of heavy vehicles are provided with double front axles with steerable wheels on both axles.

A problem of vehicles with double front axles is that these axles and hence the steerable wheels on them are positioned in such a way that they are parallel when the vehicle leaves the vehicle factory and is in an unladen state, but when the vehicle is laden the steerable wheels on its front axles move relative to one another, with the result that they are no longer parallel. This is because the axles of the vehicle travel along a curve which depends on the configuration of the suspension of the vehicle and because the draglink of each axle is bound to follow the movement of the axle. On vehicles with only one front axle, the result is that the steering wheel positions itself somewhat obliquely when the vehicle is travelling in a straight line whereas on vehicles with two steerable front axles the result is that the steerable wheels on the forward and rear front axles are positioned obliquely relative to one another, since the draglinks for these axles are connected to one another. This leads to the wheels on the two front axles not pointing straight ahead when the vehicle is travelling in a straight line, and hence to unnecessary wear of the vehicle's tyres.

A way of solving the problem of the steerable wheels on two front axles not pointing straight ahead when the vehicle is travelling in a straight line is to provide hydraulic steering of the second front axle, thereby decoupling the two front axles from one another, but this is expensive and complicated.

DE 10 2006 023784 A1 discloses a vehicle structure for a commercial vehicle with two front axles suspended adjacent to each other on a chassis framework. Leaf springs for the front front axle each tilt at the front on a first bearing fixed on a frame. Leaf springs for the rear front axle each tilt at the rear on a second bearing. Other adjacent leaf spring ends on the vehicle side each hang by floating on one end of a swivel rocker.

### Brief description of the invention

The problem of tyre wear due to the steerable wheels on vehicles with two front axles not pointing straight ahead when the vehicle is travelling in a straight line is solved, according to the invention, by a draglink device according to claim 1.

A draglink device with the characteristics according to claim 1 which comprises at least one element adapted to absorbing tensile and compressive forces, and also to being able to change its length in such a way as to eliminate oblique positioning of the steerable wheels due to spring deflection error of front axles, affords the advantage of causing the steerable wheels on a vehicle with two front axles to point straight ahead when the vehicle is travelling in a straight line, thereby reducing tyre wear.

### Brief description of the drawings

The invention is explained in more detail below with reference to the attached drawings, in which:
Figure 1 depicts schematically a vehicle with a single steerable front axle according to the state of the art,
Figure 2 depicts schematically a curve of spring deflection error as a function of the vehicle's spring deflection,
Figure 3 depicts schematically a vehicle with steerable wheels on two front axles according to a first embodiment of the invention,
Figure 4 depicts schematically a vehicle with steerable wheels on two front axles negotiating a bend,
Figure 5 depicts schematically a view from above of a steerable axle according to a first embodiment of the invention,
Figure 6 depicts schematically a draglink according to the state of the art,
Figure 7 depicts schematically a draglink according to a first embodiment of the invention, and
Figure 8 depicts a comparison of a draglink according to prior art and a draglink according to a first embodiment of the invention.

### Description of preferred embodiments

Similar items in the various drawings are given the same reference notations.

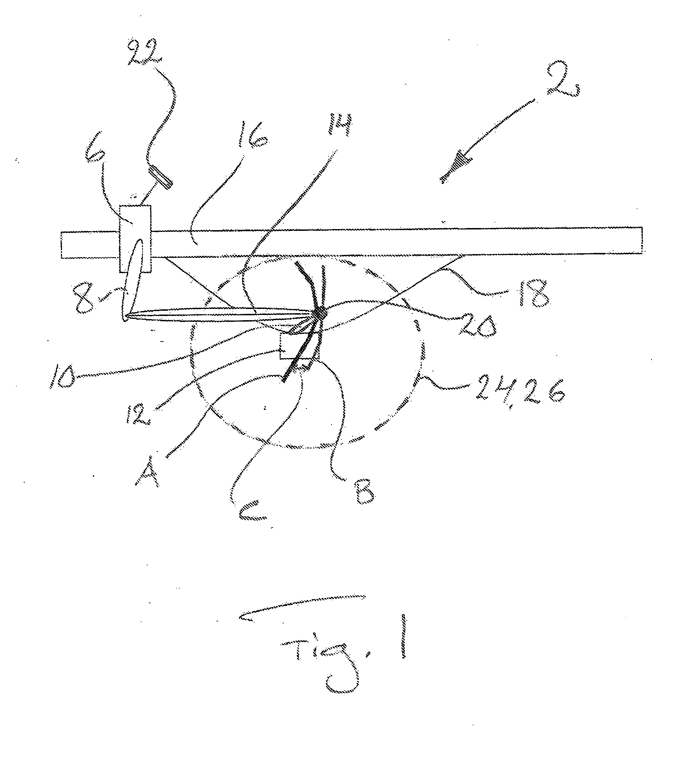

Figure 1 depicts schematically a vehicle 2 with a single steerable front axle 12 according to the state of the art. The vehicle 2 comprises a vehicle frame 16, a steering gear 6, a steering arm 8 connected pivotably to the steering gear 6, and a draglink 14 hinged to the steering arm 8 and to the draglink arm 10 on the front axle 12 of the vehicle. The steering gear is so arranged that when the steering wheel 22 is turned, e.g. to the left, the steering arm 8 moves forwards, and when the steering wheel 22 is turned the other way the steering arm 8 moves rearwards. The steering arm 8, the draglink arm 10 and the draglink 14 are rigid. The front axle 12 of the vehicle 2 is suspended in the frame 16 of the vehicle 2 via a spring package 18 which may for example be a conventional leaf spring package of trapezoidal or parabolic configuration. The diagram also shows a first schematic curve A along which the fastening point 20 of the draglink 14 in the draglink arm 10 endeavours to move when the vehicle springs up and down, and a second schematic curve B along which the fastening point 20 of the draglink 14 in the draglink arm 10 has to move if the steering angle is not to change. During springing, the movement of the front axle 12 will carry the draglink 14 with it, since the steering gear 8 cannot withstand the force which the front axle 12 exerts against the draglink 14 via the fastening point 20 of the draglink 14 in the draglink arm 10. This leads to oblique positioning of the steering wheel 22 of the vehicle 2. The distance C in mm between curve A and curve B is defined as the spring deflection error. A spring deflection error C of a vehicle 2 with only one front axle 12 leads to oblique positioning of the steering wheel 22 of the vehicle 2, but the steerable front wheels 24, 26 on the front axle 12 of the vehicle 2 continue to point straight ahead when the vehicle is travelling in a straight line.

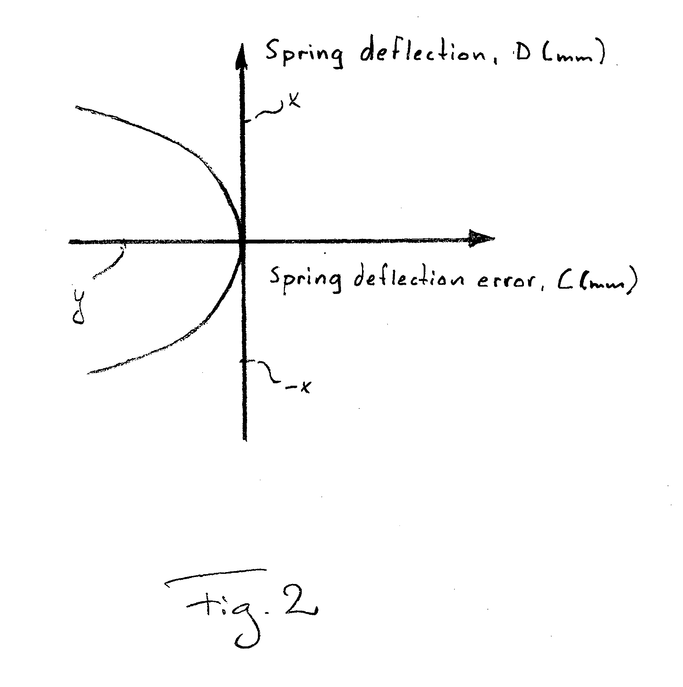

Figure 2 depicts schematically a curve of the spring deflection error C as a function of the spring deflection D, the latter defined as the change in the distance between the frame 16 of the vehicle 2 and the steerable axle 12 when the vehicle springs up and down. In the diagram the spring deflection is set at zero when the vehicle is fully laden, since minimum tyre wear when the vehicle is fully laden is usually desired. If the spring deflection error of the axle follows the curve, the spring deflection error is y mm at a spring deflection of +/- x mm.

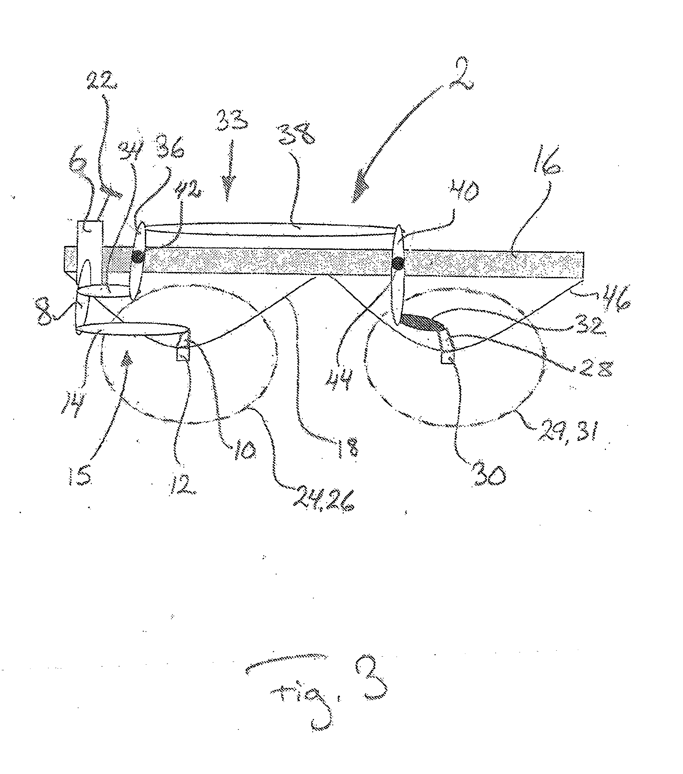

Figure 3 depicts schematically a vehicle 2 with steerable wheels 24, 26, 29, 31 on two front axles 12, 30 according to a first embodiment of the invention, which vehicle 2 comprises a vehicle frame 16, a steering gear 6 and a steering arm 8 connected pivotably to the steering gear 6. The steering gear is so arranged that when the steering wheel is turned, e.g. to the left, the steering arm 8 moves forwards, and when the steering wheel 22 is turned the other way the steering arm 8 moves rearwards. The vehicle 2 further comprises a first draglink device 15 which is hinged to the steering arm 8 and to the draglink arm 10 on the first front axle 12 of the vehicle and which comprises a draglink 14. The vehicle 2 further comprises a second draglink device 33 which is hinged to the steering arm 8 and to the draglink arm 28 on the vehicle's second front axle 30 and which comprises a second draglink 32 connected to the steering arm 8 via a draglink mechanism 34, 36, 38, 40 adapted to pivoting relative to the vehicle frame 16 at two articulation points 42, 44. The steering arm 8, the first draglink arm 10, the first draglink 14 and the second draglink arm 28 are rigid. In contrast, some element 32, 34, 38 which absorbs tensile and compressive forces in the second draglink device 33 which comprises the draglink mechanism 34, 36, 38, 40 and the second draglink 32, preferably the second draglink 32, is adapted, according to the invention, to being able to change its length as described in more detail below in order thereby to be able to compensate for the difference in spring deflection error which often occurs between the two front axles 12, 30, so that oblique positioning of the steerable wheels 24, 26, 29, 31 on the two front axles 12, 30 can be avoided.

The first front axle 12 of the vehicle 2 is suspended in the frame 16 of the vehicle 2 via a spring package 18 which may for example be a conventional leaf spring package of trapezoidal or parabolic configuration. The second front axle 30 of the vehicle 2 is suspended in the frame 16 of the vehicle 2 via a spring package 46 which may for example be a conventional leaf spring package of trapezoidal or parabolic configuration.

A spring deflection error of a vehicle 2 with steerable wheels 24, 26, 29, 31 on two front axles 12, 30 in which the draglink arms 10, 28 for the first and second front axles 12, 30 are rigidly connected to one another leads to oblique positioning of the steering wheel 22 of the vehicle 2. Since the spring deflection error of the two front axles 12, 30 is usually somewhat different owing to different geometries of the first and second draglink devices 15, 33, the result is that when the front axles are mechanically rigidly connected to one another these axles, or at least one of them, will be positioned somewhat obliquely. This leads to the steerable wheels on the two front axles not being positioned parallel to one another, and hence to increased wear of their tyres.

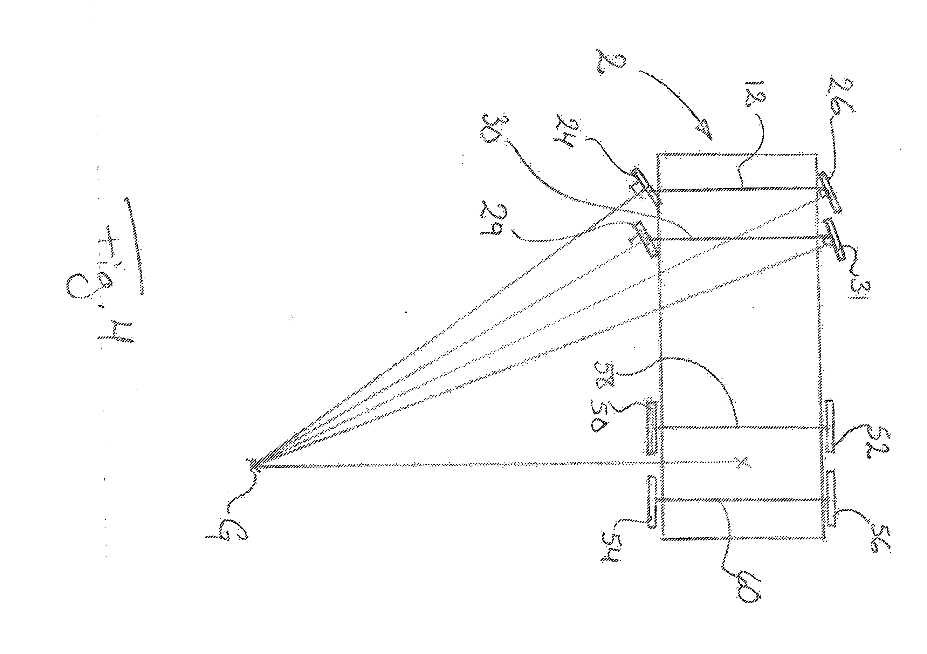

Figure 4 depicts schematically a vehicle with steerable wheels 24, 26, 29, 31 on two front axles 12, 30 negotiating a bend, in which it may be seen that each steerable wheel 24, 26, 29, 31 is adapted to pivoting somewhat differently about a rotation point G of the vehicle 2 in order to roll without slipping sideways, thereby minimising the wear of the tyres on these wheels 24, 26, 29, 31. The vehicle's powered wheels 50, 52; 54, 56 on the driving axles 58; 60 of the vehicle 2 will slip sideways somewhat when negotiating a bend.

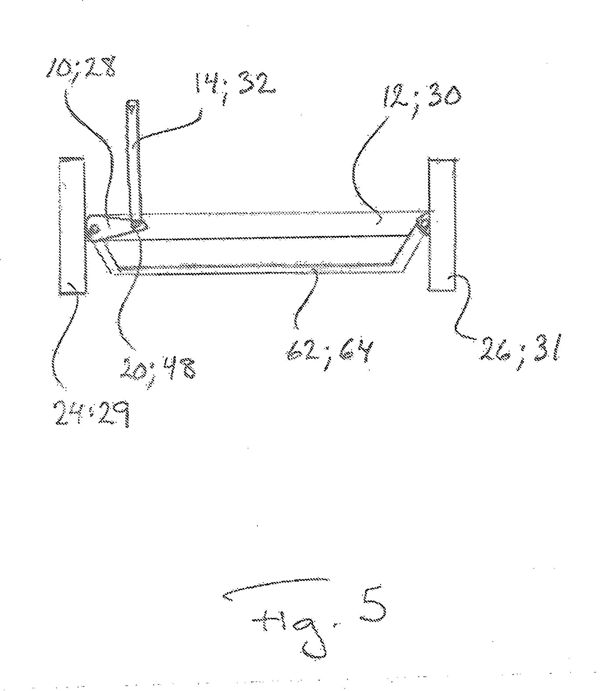

Figure 5 depicts schematically a view from above of a steerable axle 12; 30 according to a first embodiment of the invention, in which it may be seen that a draglink 14; 32 is connected to a draglink arm 10; 28 at a fastening point 20; 48 for guidance of the steerable wheels 9, 11; 29, 31 on a steerable front axle 12; 30 by means of a track rod 62; 64.

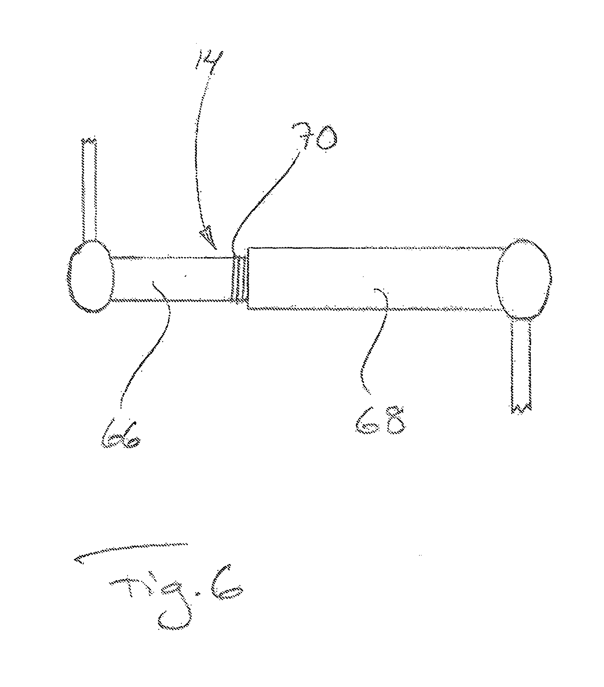

Figure 6 depicts schematically a draglink according to the state of the art, i.e. a draglink 14 of the kind which is arranged in the first draglink device on the first steerable axle of the vehicle. As may be seen, this draglink 14 is rigid, preferably a rigid metal rod. This draglink 14 may possibly take the form of two elements 66, 68 connected to one another by a threaded connection 70 so that the length of the draglink 14 can be set in a workshop to ensure that the steering wheel is straight when the vehicle is travelling in a straight line in a desired load state of the vehicle, e.g. unladen or fully laden.

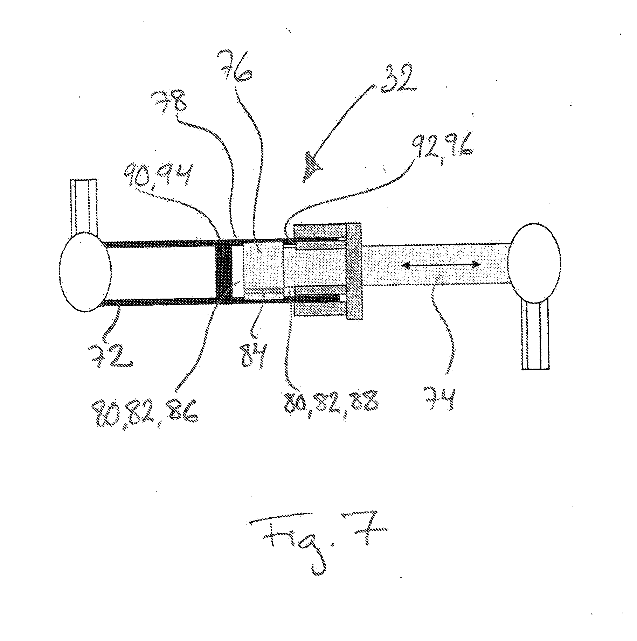

Figure 7 depicts schematically a draglink 32 according to a first embodiment of the invention of the kind arranged in the second draglink device which comprises the draglink mechanism and the second draglink 32. As mentioned above, according to this first embodiment, it is the second draglink 32 which is adapted to being able to change its length as described in more detail below in order thereby to be able to adapt to the spring deflection error which occurs on the first front axle 12. It is possible instead, however, to cause any desired element or elements to absorb tensile and compressive forces of the second draglink device in this way. As illustrated in the diagram, the draglink 32 is adapted to being able to change its length, preferably by about 5-10 mm, through comprising two separate elements 72, 74 which are movable relative to one another. The draglink 32 takes preferably the form of a damper with a piston 76 which moves within the cylinder 78 in a known manner. The chamber 80 of the cylinder is preferably filled with a liquid 82, e.g. oil, but rubber or a spring, e.g. a disc spring, may also be used to achieve a gentle and damped movement in the link, and it is also preferable for at least one flow duct 84 to be arranged in the piston 76 so that liquid can flow between the chambers 86, 88 arranged in the cylinder chamber 80 on their respective sides of the piston 76. In addition, damping units 90, 92 are preferably arranged at the extreme positions 94, 96 of the cylinder to damp the movement of the piston 76 when it reaches those positions. It is also preferable to provide a settable extreme-position limitation by one extreme position 96 being threaded to one element 74 of the draglink 32. Since the draglink 32 has a "stroke length" of, for example, 5-10 mm, the draglink 32 can absorb the static change in length which occurs when the vehicle springs down or up different distances depending on the load placed on the vehicle. The above device builds a "play" into the draglink device 33 between the first and second front axles which makes it possible for the steerable wheels on the second front axle to point straight ahead when the vehicle is being driven in a straight line without being affected by the position of the first front axle. The fact that the play is well damped means that the driver does not perceive it during driving. The result is that the effect of differences in spring deflection error between the first and second front axles is eliminated and the first front axle behaves like that of the previously mentioned vehicle with only one front axle directly connected to the steering gear, i.e. the consequence of different suspension positions due to load is that the steering wheel positions itself somewhat more or less obliquely when the vehicle is travelling in a straight line, depending on the magnitude of the spring deflection error. If the invention is also applied on the first front axle, the steering sensation will be bad because of the "play", which means that this is possible but not advantageous. Major turning of the steering wheel causes the piston 76 to reach the respective extreme position 94, 96 depending on which way the steering wheel is turned, after which the draglink 32 behaves like a draglink according to the state of the art until the steering wheel deflection is reduced sufficiently for the piston 76 to no longer abut against one of the extreme positions 94, 96.

The steerable wheels 29, 31 on the second forward axle 30 are preferably provided with positive caster angles so that when the vehicle is travelling in a straight line they follow the track of the wheels 9, 11 on the first steerable axle 10. The result is that the play provided in the second draglink device 33 will be no problem when the vehicle is being driven in a straight line, since the steerable wheels on the second front axle will automatically assume a straight ahead position.

As indicated above, some element, preferably the second draglink 32, of the second draglink device 33 which comprises the draglink mechanism 34, 36, 38, 40 and the second draglink 32, is adapted, according to the invention, to being able to change its length as described in more detail above to enable the second draglink 32 to adapt to the spring deflection error which occurs on the first front axle 12.

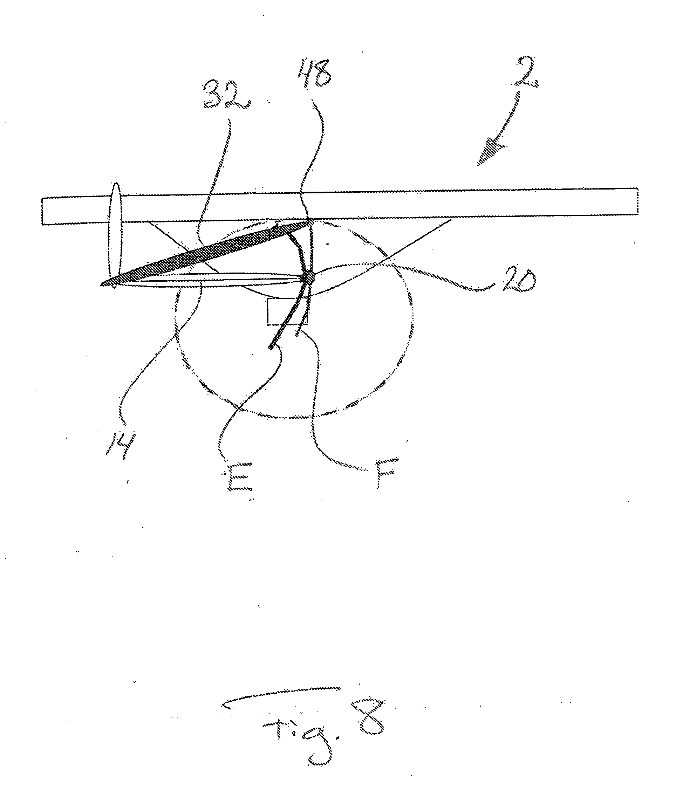

Figure 8 depicts a comparison of a draglink 14 according to prior art and a draglink 32 according to a first embodiment of the invention. A first schematic curve E illustrates how the fastening point 20 of the draglink 14 in a draglink arm according to prior art endeavours to move when the vehicle 2 springs up and down. A second schematic curve F illustrates how the fastening point 48 of the draglink 32 in a draglink arm according to a first embodiment of the invention endeavours to move when the vehicle 2 springs up and down. Since the draglink 32 according to the invention can change its length and hence follow the path along which the front axle 30 moves when springing up and down, the result will be no spring deflection error in this case.

The invention is described above in relation to a vehicle with one or two front axles with steerable wheels. It is also possible to use the invention for vehicles with three or more front axles with steerable wheels. Irrespective of the number of axles with steerable wheels, at least one of these axles, preferably the second, i.e. the second foremost, is equipped with a draglink device according to the invention.

The invention thus relates to a draglink device for a vehicle, which draglink device 33 is adapted to guiding a forward axle 30 with steerable wheels 29, 31, comprises at least one draglink 32 or a draglink mechanism 34, 36, 38, 40 and comprises at least one element 32, 34, 38 adapted to absorbing tensile and compressive forces and further adapted to being able to change its length in order thereby to eliminate spring deflection error of the forward axle 30.

## Claims

1. A draglink device for a vehicle, where the vehicle (2) comprises a steering gear (6), a steering arm (8) connected pivotably to the steering gear (6), at least two forward axles (12, 30) with steerable wheels (24, 26, 29, 31), a first draglink device (15) which is hinged to the steering arm (8) and to a draglink arm (10) on the first front axle (12) and a second draglink device (33) which is hinged to the steering arm (8) and to a draglink arm (28) on the second front axle (30) **characterised in that** the second draglink device (33) comprises at least one draglink (32) or an element (34, 38) of a draglink mechanism (34, 36, 38, 40) which draglink (32) or element (34,38) are adapted to absorbing tensile and compressive forces and further adapted to being able to change its length by the fact that said draglink (32) or said element (34, 38) of a draglink mechanism (34, 36, 38, 40) comprises two separate elements (72, 74) movable relative to one another and takes the form of a damper with a piston (76) which moves within a cylinder (78) so that oblique positioning of the steerable wheels (24, 26, 29, 30) as a result of difference in spring deflection error at the front axles (12, 30), can be avoided.

2. A draglink device according to claim 1, **characterised in that** the second draglink device (33) is adapted to guiding the second foremost, forward axle (30).

3. A draglink device according to claim 2, **characterised in that** the steerable wheels (29, 31) on the second forward axle (30) are provided with positive caster angles.

4. A draglink device according to any one of the foregoing claims, **characterised in that** the cylinder (78) has a chamber (80) filled with a liquid (82).

5. A draglink device according to any one claim 4, **characterised in that** the cylinder (78) has at least one flow duct (84) arranged in the piston (76) so that liquid can flow to and fro between chambers (86, 88) each arranged on its respective side of the piston (76).

6. A draglink device according to any one of the foregoing claims, **characterised in that** damping units (90, 92) are arranged at the extreme positions (94, 96) of the cylinder (78) to damp the movement of the piston (76) when the piston (76) reaches those positions (94, 96).

7. A draglink device according to claim 6, **characterised in that** a settable extreme-position limitation is provided by one extreme position (96) being threaded against a separate element (74) of the draglink (32) or said element (34, 38) of a draglink mechanism (34, 36, 38, 40).

8. A draglink device according to any one of the foregoing claims, **characterised in that** the draglink (32) or element (34,38) of the draglink mechanism (34, 36, 38, 40) are adapted to being able to change its length by about 5-10 mm.

9. A draglink device according to any one of the foregoing claims, **characterised in that** the draglink mechanism (34, 36, 38, 40) is adapted to pivoting relative to the vehicle (2) frame (16) at two articulation points (42, 44).

10. A draglink device according to any one of the foregoing claims, **characterised in that** the steering arm (8), the first draglink arm (10), a draglink (14) of the first draglink devise (15), and the second draglink arm (28) are rigid.

## Patentansprüche

1. Spurstangenanordnung für ein Fahrzeug, wobei das Fahrzeug (2) umfasst: ein Lenkgetriebe (6), einen Lenkhebel (8), der schwenkbar verbunden ist mit dem Lenkgetriebe (6), mindestens zwei Vorderachsen (12, 30) mit lenkbaren Rädern (24, 26, 29, 31), eine erste Spurstangenordnung (15), die gelenkig verbunden ist mit dem Lenkhebel (8) und mit einem Spurstangenhebel (10) auf der ersten Vorderachse (12), und eine zweite Spurstangenordnung (33), die gelenkig verbunden ist mit dem Lenkhebel (8) und mit einem Spurstangenhebel (28) auf der zweiten Vorderachse (30), **dadurch gekennzeichnet,**
**dass** die zweite Spurstangenanordnung (33) mindestens eine Spurstange (32) oder eine Komponente (34, 38) eines Spurstangenmechanismus (34, 36, 38, 40) umfasst, wobei die Spurstange (32) oder die Komponente (34, 38) dazu ausgebildet sind, Zugkräfte und Druckkräfte zu absorbieren und ferner dazu ausgebildet sind, in ihrer Länge änderbar zu sein, indem die Spurstange (32) oder die Komponente (34, 38) eines Spurstangenmechanismus (34, 36, 38, 40) zwei getrennte, relativ zueinander bewegliche Komponenten (72, 74) umfasst und die Form eines Dämpfers annimmt,
mit einem Kolben (76), der sich in einem Zylinder (78) bewegt, sodass ein Schrägstellen der lenkbaren Räder (24, 26, 29, 30) aufgrund einer Abweichung bei einem Federwegfehler an den Vorderachsen (12, 30) vermeidbar ist.

2. Spurstangenanordnung nach Anspruch 1, **dadurch gekennzeichnet, dass** die zweite Spurstangenanordnung (33) dazu ausgebildet ist, die zweite vorderste Vorderachse (30) zu führen.

3. Spurstangenanordnung nach Anspruch 2, **dadurch gekennzeichnet, dass** die lenkbaren Räder (29, 31) an der zweiten Vorderachse (30) positive Nachlaufwinkel aufweisen.

4. Spurstangenanordnung nach einem der vorangehenden Ansprüche, **dadurch gekennzeichnet, dass** der Zylinder (78) eine mit Flüssigkeit (82) gefüllte Kammer (80) aufweist.

5. Spurstangenanordnung nach Anspruch 4, **dadurch gekennzeichnet, dass** der Zylinder (78) mindestens einen Flussdurchgang (84) aufweist, der in dem Kolben (76) angeordnet ist, sodass Flüssigkeit zwischen Kammern (86, 88) hin- und her fließen kann, wobei jede Kammer auf ihrer jeweiligen Seite des Kolbens (76) angeordnet ist.

6. Spurstangenanordnung nach einem der vorangehenden Ansprüche, **dadurch gekennzeichnet, dass** Dämpfungseinheiten (90, 92) an den äußersten Positionen (94, 96) des Zylinders (78) angeordnet sind, um die Bewegung des Kolbens (76) zu dämpfen, wenn der Kolben (76) diese Positionen (94, 96) erreicht.

7. Spurstangenanordnung nach Anspruch 6, **dadurch gekennzeichnet, dass** die Spurstangenanordnung ein einstellbares Begrenzen der äußersten Position aufweist, indem eine äußerste Position (96) gegen eine getrennte Komponente (74) der Spurstange (32) oder der Komponente (34, 38) eines Spurstangenmechanismus (34, 36, 38, 40) gefädelt wird.

8. Spurstangenanordnung nach einem der vorangehenden Ansprüche, **dadurch gekennzeichnet, dass** die Spurstange (32) oder die Komponente (34, 38) des Spurstangenmechanismus (34, 36, 38, 40) dazu ausgebildet ist, etwa 5-10 mm in der Länge veränderbar zu sein.

9. Spurstangenanordnung nach einem der vorangehenden Ansprüche, **dadurch gekennzeichnet, dass** der Spurstangenmechanismus (34, 36, 38, 40) dazu ausgebildet ist, an zwei Gelenkpunkten (42, 44) relativ zu einem Rahmen (16) des Fahrzeugs (2) schwenkbar zu sein.

10. Spurstangenanordnung nach einem der vorangehenden Ansprüche, **dadurch gekennzeichnet, dass** der Lenkhebel (8), der erste Spurstangenhebel (10), eine Spurstange (14) der ersten Spurstangenanordnung (15), und der zweite Spurstangenhebel (28) steif sind.

## Revendications

1. Dispositif de biellette de direction pour un véhicule, lequel véhicule (2) comprend un mécanisme de direction (6), un bras de direction (8) connecté de manière pivotante au mécanisme de direction (6), au moins deux essieux avant (12, 30) avec des roues orientables (24, 26, 29, 31), un premier dispositif de biellette de direction (15) qui est articulé au bras de direction (8) et à un bras de biellette de direction (10) sur le premier essieu avant (12) et un deuxième dispositif de biellette de direction (33) qui est articulé au bras direction (8) et à un bras de biellette de direction (28) sur le deuxième essieu avant (30), **caractérisé en ce que** le deuxième dispositif de biellette de direction (33) comprend au moins une biellette de direction (32) ou un élément (34, 38) d'un mécanisme de biellette de direction (34, 36, 38, 40), lesquels biellette de direction (32) ou élément (34, 38) sont conçus pour absorber des forces de traction et de compression et sont en outre conçus pour pouvoir changer de longueur par le fait que ladite biellette de direction (32) ou ledit élément (34, 38) d'un mécanisme de biellette de direction (34, 36, 38, 40) comprend deux éléments séparés (72, 74) mobiles l'un par rapport à l'autre et se présente sous la forme d'un amortisseur ayant un piston (76) qui se déplace dans un cylindre (78) de telle sorte qu'un positionnement oblique des roues orientables (24, 26, 29, 30) en conséquence d'une différence d'erreur de déflection du ressort au niveau des essieux avant (12, 30) puisse être évité.

2. Dispositif de biellette de direction selon la revendication 1, **caractérisé en ce que** le deuxième dispositif de biellette de direction (33) est conçu pour guider le deuxième essieu avant (30) le plus avancé.

3. Dispositif de biellette de direction selon la revendication 2, **caractérisé en ce que** les roues orientables (29, 31) sur le deuxième essieu avant (30) sont pourvues d'angles de chasse positifs.

4. Dispositif de biellette de direction selon l'une quelconque des revendications précédentes, **caractérisé en ce que** le cylindre (78) a une chambre (80) remplie d'un liquide (82).

5. Dispositif de biellette de direction selon la revendication 4, **caractérisé en ce que** le cylindre (78) a au moins un conduit d'écoulement (84) formé dans le piston (76) de telle sorte que du liquide puisse s'écouler en va et vient entre des chambres (86, 88), situées chacune d'un côté respectif du piston (76).

6. Dispositif de biellette de direction selon l'une quelconque des revendications précédentes, **caractérisé en ce que** des unités d'amortissement (90, 92) sont situées aux positions extrêmes (94, 96) du cylindre (78) pour amortir le mouvement du piston (76) lorsque le piston (76) atteint ces positions (94, 96).

7. Dispositif de biellette de direction selon la revendication 6, **caractérisé en ce qu'**une limitation de position extrême réglable est assurée par le fait qu'une position extrême (96) est vissée contre un élément séparé (74) de la biellette de direction (32) ou dudit élément (34, 38) d'un mécanisme de biellette de direction (34, 36, 38, 40).

8. Dispositif de biellette de direction selon l'une quelconque des revendications précédentes, **caractérisé en ce que** la biellette de direction (32) ou l'élément (34, 38) du mécanisme de biellette de direction (34, 36, 38, 40) sont conçus pour pouvoir changer de longueur d'environ 5-10 mm.

9. Dispositif de biellette de direction selon l'une quelconque des revendications précédentes, **caractérisé en ce que** le mécanisme de biellette de direction (34, 36, 38, 40) est conçu pour pivoter par rapport au châssis (16) du véhicule (2) au niveau de deux points d'articulation (42, 44).

10. Dispositif de biellette de direction selon l'une quelconque des revendications précédentes, **caractérisé en ce que** le bras de direction (8), le premier bras de biellette de direction (10), une biellette de direction (14) du premier dispositif de biellette de direction (15), et le deuxième bras de biellette de direction (28) sont rigides.
